# EUROPÄISCHE PATENTSCHRIFT

(11) **EP 1 409 891 B1**
(45) Veröffentlichungstag und Bekanntmachung des Hinweises auf die Patenterteilung: **03.05.2006**
(21) Anmeldenummer: 02753901.4
(22) Anmeldetag: 11.07.2002
(51) Int. Cl.: F16H 53/02, F01L 1/047, B23P 11/00, B21D 53/84

(54) **NOCKEN MIT AUFNAHMEÖFFNUGEN FÜR EINE WELLE UND VERFAHREN ZUR HERSTELLUNG EINER NOCKENWELLE MIT DIESEN NOCKEN**
CAMS WITH RECEIVING OPENINGS FOR A SHAFT AND METHOD FOR PRODUCING A CAMSHAFT WITH SAID CAMS
CAMES AVEC OUVERTURES DE RECEPTION POUR UN ARBRE ET PROCEDE DE FABRICATION D'UN ARBRE A CAMES PRESENTANT LESDITES CAMES

(30) Priorität: 20.07.2001 AT 11342001
(43) Veröffentlichungstag der Anmeldung: 21.04.2004
(73) Patentinhaber: ThyssenKrupp Presta AG, 9492 Eschen (LI)
(72) Erfinder: MEUSBURGER, Peter, A-6811 Göfis (AT); MÜLLER, Oskar, A-6721 Thüringerberg (AT); WIESNER, Peter, A-6713 Ludesch (AT)
(74) Vertreter: Hofmann, Ralf U.
(86) Internationale Anmeldenummer: PCT/AT2002/000202
(87) Internationale Veröffentlichungsnummer: WO 2003/008842

(56) Entgegenhaltungen:
- DE-A- 3 606 111
- DE-A- 3 717 190
- DE-A- 10 024 553
- DE-A- 19 640 872
- DE-A- 19 716 320
- DE-A- 19 841 971
- DE-C- 3 536 296
- DE-C- 4 121 951
- GB-A- 1 085 371
- US-A- 3 438 660
- US-A- 5 165 304

## Beschreibung

Die Erfindung bezieht sich auf einen Nocken gemäß dem Oberbegriff des Patentanspruches 1 und auf Verfahren zur Herstellung einer Nockenwelle mit solchen Nocken.

Es ist bekannt, Nocken für Nockenwellen aus Blechteilen zusammenzubauen. Eine solche Konstruktion ist in der DE 100 24 553 A1 geoffenbart. Auch die DE 196 40 872 A1 zeigt eine solche Konstruktion. Nach der DE 196 40 872 A1, die die Merkmale des Oberbegriffs des Anspruchs 1 zeigt ist der Nocken durch ein kombiniertes Umformverfahren erzeugt und besteht aus einem Innenbord, einem Außenbord und einem dazwischenliegenden Steg, wobei der Innenbord auf der Welle aufliegt, der Außenbord die Bahn des Gleitschuhes vorgibt und der Steg den Boden darstellt. In einer besonderen Ausführungsform dieser vorbekannten Konstruktion, die dem Oberbegriff des Patentanspruchs 1 entspricht, sind zur Bildung des Nockens zwei gleichgeformte Teile so zueinander angeordnet, daß ihre Stege oder Böden einander unmittelbar benachbart sind und aneinander anliegen.

Nocken müssen, damit sie ihre Funktion erfüllen können, gehärtet sein, zumindest im Außenbereich. Bei den Nocken nach DE 196 40 872 A1 muß entweder bei Randhärtung jeder Nocken einzeln, beispielsweise induktiv gehärtet werden, oder aber das nachfolgende Fügen mit der Welle wird erheblich eingeschränkt, wenn die Nocken als Schüttgut gehärtet werden sollen.

Es ist an dieser Stelle auch zu vermerken, daß aus der DE 35 36 296 C1 eine Nockenwelle bekannt ist, deren Nocken aus einem gesinterten Werkstoff als massive Bauteile gefertigt sind. Der Durchmesser der Bohrung der Nocke ist um ein geringes Maß größer gewählt als der Durchmesser der Welle, so daß der Nocken ohne besonderen Kraftaufwand auf die Welle geschoben werden kann in die für ihn vorgesehene Position. In der Wandung der Bohrung des Nockens oder aber an der Stelle der Welle, an der der Nocken zu fixieren ist, ist ein nutenartiger Einstich vorgesehen. In diesen nutenartigen Einstich wird Lot eingebracht und anschließend nach Justierung des Nockens die so vorbereitete Nockenwelle in einem Vakuumofen erhitzt, bis das Lot dünnflüssig ist und den Kapillarspalt zwischen der Wand der Bohrung und der Umfangsfläche der Welle füllt. Die hier vorgesehenen Differenzen in den Abmessungen sind so klein bemessen, daß nur Kapillarspalte entstehen, die das flüssige Lot aufsaugen. Nockenwellen dieser Bauart haben keinen Eingang in die Praxis gefunden.

Des weiteren ist auch die Nockenwelle nach DE 36 06 111 C2 zu erwähnen. Bei dieser Nockenwelle liegt zwischen Nocken und Welle ein in sich gewellter längsgeschlitzter Federblechstreifen, dessen den Längsschlitz begrenzende Kanten bei unbelastetem, jedoch in die Bohrung des Nockens eingelegtem bzw. auf die Welle aufgestecktem Federblechstreifen - bevor die zu paarenden Teile zusammengefügt werden - in Umfangsrichtung des Federblechstreifens an im wesentlichen radial verlaufenden Flanken eines Vorsprunges anliegen, der von der Wandung der Bohrung des Nockens nach Innen auskragt. Die radiale Stärke des in sich gewellten und geschlitzten unbelasteten Federblechstreifens ist um ein geringes Maß größer als die halbe Differenz des Durchmessers der Bohrung und des Außendurchmessers der Welle. Der hier vorgesehene Federblechstreifen soll den Nocken gegenüber der Welle in radialer Richtung verspannen. Auch diese Konstruktion hat keinen Eingang in die Praxis gefunden. Auch bei dieser Nockenwelle werden massive Nocken eingesetzt, die aus Sinterwerkstoff gefertigt sein können oder aus Stahl.

In den beiden letzterwähnten vorbekannten Fällen werden das Lot bzw. der Federblechstreifen bei der Montage eingefügt.

Ein nicht gattungsgemäßer massiver Nocken ist weiters aus der DE 198 41 971 A1 bekannt. Zur formschlüssigen Befestigung dieses massiven Nockens auf einer Trägerwelle 1 ist eine Hülse vorgesehen, die über Einprägungen in vorgefertigte Vertiefungen der Trägerwelle formschlüssig eingreift und an ihrer Außenseite profiliert ausgebildet ist. Der massive Nocken weist an seiner Innenkontur ein entsprechendes gegengleiches Profil auf, wodurch der Formschluß des Nockens mit der Hülse hergestellt wird.

Ein weiterer nicht gattungsgemäßer Nocken ist aus der US-PS 3,438,660 bekannt. Zur reibschlüssigen Festlegung des Nockens auf einer Welle ist eine eine relativ komplizierte Form aufweisende Spannhülse vorgesehen, welche großflächig zwischen der Oberfläche der Welle und der inneren Öffnung des Nockens verspannt ist. Es werden hier vergleichweise große Kräfte auf das Material des Nockens im Bereich von dessen Grundkreis ausgeübt. Weiters muß der Freiraum zwischen Welle und Nocken für die einzufügende Hülse relativ groß sein. Das führt dazu, daß der Nocken einen entsprechend großen Innendurchmesser im Vergleich zur Welle besitzen mußt und entsprechend massiv auszubilden ist. Im Motorenbau sind jedoch häufig große Wellendurchmesser, wegen der hohen zu übertragenden Drehmomente und kleine Nockengrundkreisdurchmesser gewünscht. Dem widerspricht der Einbau dicker, speziell geformter Hülsen sowie besonders massiver Nocken.

Aufgabe der Erfindung ist es daher, einen Nocken der eingangs erwähnten Art so zu gestalten, daß er als Schüttgut kostengünstig gehärtet werden kann und trotzdem durch alle möglichen und bekannten Fügeverfahren ohne Einschränkung mit der Welle verbindbar ist. Erfindungsgemäß gelingt dies durch einen Nocken mit den Merkmalen des Anspruchs 1.

Durch die Erfindung können in überraschend einfacher und vorteilhafter Weise Wellen mit auf diesen befestigten aus Blechteilen bestehenden Nocken hergestellt werden, wobei die Hülse sowohl mit dem Blechteil als auch mit der Welle formschlüssig und/oder kraftschlüssig und/oder materialschlüssig (d. h. stoffschlüssig) verbunden sein kann. Vorteilhafterweise kann hierbei die Hülse auch eine einfache Kontur aufweisen, ohne daß an der Innenwandung und/oder Außenwandungen Ausfräsungen vorgesehen sind, wobei die Innenwandung und Außenwandung insbesondere im Querschnitt gesehen kreisförmig ausgebildet sein können.

Wenn besonders kompakte Bauraumverhältnisse gefordert sind, das heißt kleine Nockenbundbreite im Grundkreisbereicht und vergleichsweise große Wellendurchmesser, kann die Hülse eine zum Stand der Technik vergleichsweise kleine Wandstärke aufweisen. Ebenso kann durch den Verzicht auf eine spezielle Innenkontur des Nockens zur Erreichung des Formschlusses, dessen Bundbreite im Grundkreisbereich klein gestaltet sein.

Auch sind Genauigkeitsanforderungen mit dem Stand der Technik verglichen geringer.

Eine weitere Aufgabe der Erfindung ist es, Verfahren vorzusehen, mit deren Hilfe Nockenwellen mit den erfindungsgemäßen Nocken kostengünstig gefertigt werden können. Solche Verfahren sind in den Patentansprüchen 19 bis 23 geoffenbart. Zweckmäßige Ausgestaltungen des Nockens und seiner Teile sind in den Unteransprüchen aufgelistet.

Zur Veranschaulichung der Erfindung werden anhand der Zeichnung Ausführungsbeispiele näher beschrieben, ohne dadurch die Erfindung darauf einzuschränken. Es zeigen:
- Fig. 1: einen Teillängsschnitt durch eine fertige Nockenwelle;
- Fig. 2: einen Querschnitt nach der Linie II-II in Fig. 1;
- Fig. 3: die Ansicht eines napfartigen Blechteiles zur Bildung des Nockens.

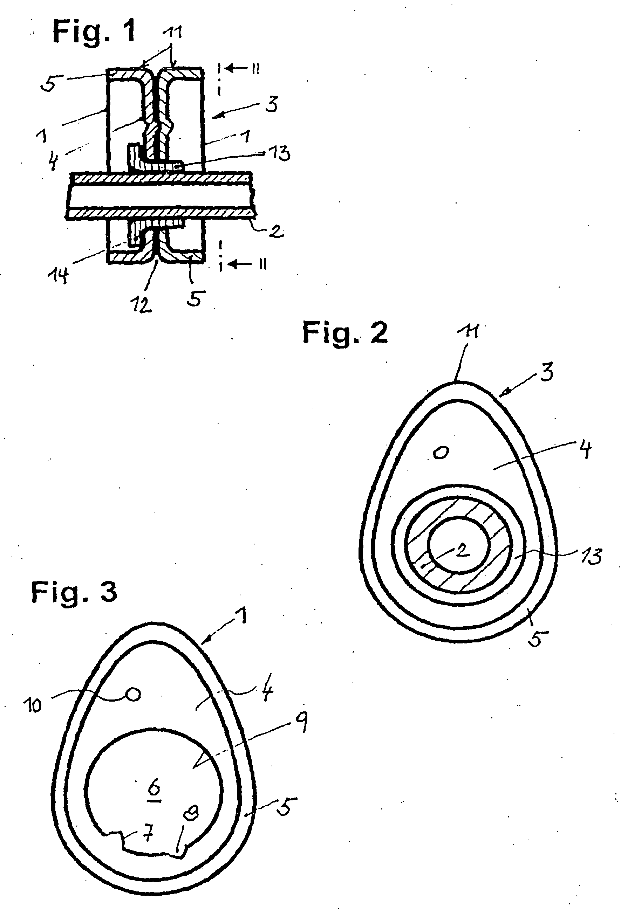

Die Blechteile 1, durch deren jeweils paarweise Anordnung ein Nocken 3 gebildet wird, besitzt eine napfartige Form, wobei diese napfartige Form einen im wesentlichen ebenen Boden 4 und einen umgebördelten Rand 5 aufweist. Die äußere Umfangskontur dieses Blechteiles 1 entspricht dabei möglichst genau dem jeweils erforderlichen Nockenprofil, dabei kann ein Übermaß für eine eventuell nachfolgende Bearbeitung (Härten, Schleifen) vorgehalten sein. Im Boden 4 des Blechteiles 1 ist eine Aufnahmeöffnung 6 ausgespart, die zweckmäßigerweise durch eine Stanzoperation gefertigt wird. Diese Aufnahmeöffnung 6 ist im gezeigten Ausführungsbeispiel im wesentlichen kreisrund, kann aber auch eine davon abweichende Form besitzen. Entlang des Randes 9 der Aufnahmeöffnung 6 können radiale Vorsprünge 7 und/oder radial zurückweisende Aussparungen 8 angeordnet sein. In Fig. 3 ist jeweils ein solcher Vorsprung bzw. eine Aussparung 8 eingezeichnet. Entlang des Umfanges dieses Randes 9 können mehrere solcher Elemente angeordnet sein. Der Rand 9 der Aufnahmeöffnung 6 liegt dabei in der Ebene des sie aufnehmenden Bodens 4, was aus Fig. 1 unmittelbar erkennbar ist. Oder mit anderen Worten ausgedrückt, die Ebene der Aufnahmeöffnung 6 liegt in der Ebene des Bodens 4. Der Durchmesser dieser Aufnahmeöffnung 6 ist erheblich größer als der Durchmesser der Welle 2, für die dieser Teil bestimmt ist. Im Boden 4 der Blechteile 1 kann eine Delle - in Fig. 3 durch die Linie 10 angedeutet - eingeprägt sein, die mit einem Nocken am Gegenstück als Positionierungsmittel beim Zusammenfügen der paarweise anzuordnenden Blechteile 1 dient. Positionierungsmittel dieser Art können mehrere pro Blechteil 1 vorgesehen sein. Solche napfartigen Blechteile 1 zur Bildung des Nockens 3 sind kostengünstig auf Pressen von einem Blechcoil in einem Arbeitsschritt auszustanzen und umzuformen.

Zur Bildung eines Nockens 3 werden zwei Blechteile 1 paarweise so zueinander angeordnet, daß ihre Böden einander benachbart sind, vorzugsweise aneinander unmittelbar anliegen, wie aus Fig. 1 ersichtlich. Damit die beiden Blechteile 1 funktionsgerecht gefügt werden, sind die schon erwähnten Positionierungsmittel vorgesehen. Die Außenflächen der umgebördelten Ränder 5 bilden dabei die Nockenlaufbahn 11 des Nockens 3. Die umgebördelten Ränder 5 der beiden aneinander anliegenden Blechteile 1 begrenzen eine umlaufende Nut 12 mit einem im wesentlichen keilförmigen Querschnitt. Diese Nut kann zur Aufnahme eines Schmiermittels dienen. Um die Nut 12 mit Schmiermittel zu vesorgen ist auf mindestens einer der einander zugewandten Seiten der Böden 4 mindestens eine radial verlaufende Rinne zur Bildung eines Kanals eingeprägt. Dieser Kanal ist über Bohrungen in der Hülse 13 und in der als Rohr ausgebildeten Welle 2 mit deren Innenraum verbunden. Über die Hohlwelle 2, die erwähnten deckungsgleich liegenden Bohrungen und den Kanal wird die Nut 12 in der Nockenlaufbahn 11 mit Schmiermittel versorgt. Die beiden Blechteile 1 sind fest miteinander verbunden, beispielsweise durch Kleben, Laserschweißen, Widerstandsschweißen, Kondensatorentladungsschweißen oder durch Durchsetzfügen. Die so paarweise gefügten Blechteile 1 werden in einem nächsten Arbeitsschritt gehärtet. Es ist dabei vorteilhaft, daß eine Vielzahl derart gefertigter Bauteile evtl. von unterschiedlichen Profilen als Schüttgut gemeinsam nach einem bekannten, für die jeweils verwendeten Werkstoffe besonders geeigneten Härteverfahren gehärtet und/oder angelassen werden können. Auch eine Aufkohlung oder Nitrierung ist möglich. Grundsätzlich wäre es auch denkbar, die Blechteile 1 vor ihrer Paarung zu härten bzw. anzulassen. Vorzugsweise werden die Blechteile 1 aus 16MnCr5 gefertigt, es ist jedoch denkbar, 100Cr6 oder andere Wälzlager- oder Einsatzstähle zu verwenden.

Zur Befestigung der paarweise gefügten Blechteile 1 auf einer Welle 2, die einen massiven Querschnitt aufweisen oder als Wellenrohr ausgebildet sein kann, dient eine Hülse 13, die ebenfalls als Umformteil aus blechartigem Ausgangsmaterial gefertigt ist. Zweckmäßigerweise besitzt die Hülse 13 zumindest an einem ihrer Enden einen nach außen umgebördelten Kragen 14, der die Manipulation und Montage der Hülse erleichtert. Die achsiale Länge der Hülse 13 ist gleich oder kleiner als die Breite der durch die äußeren Ränder 5 der Blechteile 1 gebildeten Nockenlaufbahn 11. Dank dieser Maßnahme ist es möglich, die Nocken 3 auf der Welle 2 möglichst nahe aneinander anzuordnen. Zweckmäßigerweise ist die Hülse 13 aus ungehärtetem Eisenwerkstoff gefertigt, der ein hohes Verformungsvermögen aufweist. Die Wandstärke der Hülse 13 beträgt mindestens 0,7 mm. Werden kompakte Bauraumverhältnisse gefordert, das heißt kleine Bundbreiten der Nocken im Grundkreis und große Wellendurchmesser, kann die Wandstärke der Hülse notfalls auch unter 0,7mm, jedoch, abhängig vom Fügeverfahren nicht unter 0,35 beim Laserfügen und 0,5mm bei kraft- und/oder formschlüssigen Verbindungen betragen.

Die Hülse 13, die nicht gehärtet wird und die auch nicht gehärtet zu werden braucht, wird in die Aufnahmeöffnung 6 eingelegt. Je nach Anwendung ist dabei zu prüfen, ob zwischen den zu verbindenden Teilen (gepaarte Blechteile 1 einerseits und Hülse 13 andererseits) ein Preßsitz oder ein loser Sitz vorzusehen ist. Die Wahl des Sitzes hängt im wesentlichen von jenem Verfahren ab, mit dem der Nocken bzw. die Hülse 13 auf der Welle 2 festzulegen ist. So müssen bei der Verwendung von Laserschweißen andere Abstände zwischen den zu fügenden Teilen eingehalten werden, als wenn die Teile durch einen Preßsitz zusammengefügt werden. Diese Überlegungen gelten auch für die Bemessung der Durchmesser von Welle 2 und Hülse 13.

Beim gezeigten Ausführungsbeispiel sind die Umfangskontur der Aufnahmeöffnung 6 sowie die Umfangskontur der Welle 2 im wesentlichen kreisförmig. Es ist denkbar, daß diese erwähnten Umfangskonturen hinsichtlich ihres Verlaufes voneinander abweichen. So kann die eine Umfangskontur beispielsweise kreisförmig oder oval sein, die andere Umfangskontur mehreckig. In allen Fällen ist die Hülse 13 so zu gestalten, daß ihre äußere Umfangskontur und ihre innere Umfangskontur im wesentlichen korrespondierend zu den Umfangskonturen der Aufnahmeöffnung 6 bzw. der Welle 2 ausgestaltet sind.

Die Querschnittsabmessungen der Welle 2 an den Stellen, an welchen ein Nocken 3 jeweils festzulegen ist und die Abmessungen der Aufnahmeöffnung 6, unabhängig davon ob deren Umfangskontur stetig verläuft (kreisförmig oder oval) oder Ecken aufweist, sind so aufeinander abgestimmt, daß zwischen diesen Stellen der Welle 2 und der Innenwandung der Aufnahmeöffnung 6 ein erhebliches Spiel verbleibt. Der dadurch erzielte Ringraum an seinen engsten Stellen mindestens 0,7 mm beträgt, vorzugsweise jedoch breiter ist, um die erwähnte Hülse 13 aufzunehmen. Die Wandstärke der Hülse 13 ist so zu wählen, daß an ihr die erwähnten Fügeverfahren ausgeübt werden können.

Für besondere Ansprüche kann der Ringraum auch Breiten unter 0,7mm besitzen. Wird insbesondere ein mechanisches Fügeverfahren mittels kraft- und/oder formschlüssiger Verbindung angewendet, bietet sich zur Erhöhrung der übertragbaren Momente eine regelmäßige Verzahnung, wie sie durch den einzelnen Vorsprung 7 in Fig. 3 angedeutet ist, an. Diese Zähne brauchen nur Zahntiefen von weniger als 0,1mm um die entsprechenden Festigkeiten zu gewährleisten. Entsprechende Verzahnungen, auch in der Hülse, können durch ein einfaches Fertigungsverfahren, wie Räumen oder während der Herstellung durch Umformen mit eingebracht werden. Derartige Verzahnungen dürfen durchaus in den Ringraum mit Breiten bis notfalls 0,5mm hineinragen.

Die paarweise verbundenen Blechteile 1, die den Nocken 3 und die mit ihm verbundene Hülse 13 bilden, können mit einer Welle 2 durch unterschiedliche Fügeverfahren verbunden werden. Dies kann beispielsweise durch Laserschweißen geschehen. Eine andere Möglichkeit sieht vor, die Welle 2, sofern sie als Wellenrohr ausgebildet ist, durch einen im Wellenrohr aufzubauenden Innendruck aufzuweiten. Des weiteren kann die Welle 2 abschnittsweise in jenen Bereichen, an welchen die Nocken 3 festzulegen sind, durch Rollierungen mit einem vergrößerten Durchmesser ausgestattet werden, so daß der Wellendurchmesser an diesen Stellen ein Übermaß besitzt. Dieses Übermaß ist dabei so auszulegen und auf den inneren Durchmesser der Hülse 13 abzustimmen, daß beim anschließenden Aufpressen der Nocken auf diese Abschnitte ein sicherer, kraftschlüssiger und eventuell auch formschlüssiger Verbund entsteht. Zweckmäßig ist dabei die Innenwandung der Hülse 13 gezahnt oder gezackt ausgebildet. Ein solches Fügeverfahren für Nockenwellen ist an sich bekannt (DE 37 17 190 und DE 41 21 951). Da die Hülse 13 aus einem relativ weichen Material gefertigt werden kann, ist dabei sichergestellt, daß die Rollierung der Welle 2 einerseits und die Verzahnung an der Innenwandung der Hülse 13 andererseits einen dauerhaften, sicheren und festen Kraft- und/oder Formschluß erzielen. Der Kragen 14 kann dabei als Einführung dienen und evtl. mit einer besonderen Form zur Verbesserung der Fügeoperation versehen sein.

Für die Montage kann die Hülse 13 auch lose in das Blechteil 1 eingefügt werden und zusammen werden dann diese beiden Teile 1 und 13 auf die Welle aufgepreßt, beispielsweise in bekannter Art.

Dank des erfindungsgemäßen Vorschlages können die Blechteile 1 als Schüttgut kostengünstig gehärtet werden, und trotzdem kann der durch die Blechteile 1 gebildete Nocken durch alle möglichen und bekannten Fügeverfahren ohne Einschränkung dank der zwischengeschalteten Hülse 13 mit der Welle 2 verbunden werden. Die Wandstärke der Hülse 13 ist so bemessen, daß an ihr die erwähnten Fügeverfahren anwendbar und einsetzbar sind.

### Legende

### zu den Hinweisziffern:

- 1: Blechteil
- 2: Welle
- 3: Nocken
- 4: Boden
- 5: Rand
- 6: Aufnahmeöffnung
- 7: Vorsprung
- 8: Aussparung
- 9: Rand
- 10: Linie
- 11: Nockenlaufbahn
- 12: Nut
- 13: Hülse
- 14: Kragen

## Patentansprüche

1. Nocken mit einer Aufnahmeöffnung (6) für eine Welle (2), wobei der Nocken (3) aus mindestens zwei im Wesentlichen gleichgeformten napfartigen Blechteilen (1) gebildet ist, die jeweils einen Boden (4) und mindestens einen äußeren, die Nockenlaufbahn (11) bildenden, umgebördelten Rand (5) aufweisen, und die Aufnahmeöffnung (6) in den Böden (4) der Blechteile (1) ausgeformt ist und die beiden Blechteile (1) so angeordnet sind, dass ihre, die Aufnahmeöffnung (6) aufweisenden Böden (4) einander benachbart liegen, **dadurch gekennzeichnet, daß** die Abmessungen der Aufnahmeöffnung (6) so bemessen sind, daß die Innenwandung der Aufnahmeöffnung (6) die Welle (2) mit einem einen Ringraum zur Aufnahme einer Hülse (1) vorgebenden Spiel umschließt und im von diesem Spiel vorgegebenen Ringraum zur Befestigung des Nockens (3) auf der Welle (2) die Hülse (13) als Verbindungsglied zwischen diesen Teilen angeordnet ist und sowohl mit dem Blechteil (1) wie auch mit der Welle (2) form-, kraft- und/oder materialschlüssig verbunden ist, und dass die Böden (4) der Blechteile (1) im Wesentlichen eben ausgebildet sind und die Ränder (9) der die Aufnahmeöffnung (6) bildenden Aussparungen in den Böden (4) in der Ebene des jeweiligen Bodens (4) liegen.

2. Nocken nach Anspruch 1, **dadurch gekennzeichnet, daß** die Hülse aus einem ungehärteten Eisenwerkstoff besteht.

3. Nocken nach Anspruch 1 oder Anspruch 2, **dadurch gekennzeichnet, daß** die Hülse (13) zumindest an einem ihrer Enden einen nach außen umgebördelten Kragen (14) aufweist.

4. Nocken nach einem der Ansprüche 1 bis 3, **dadurch gekennzeichnet, daß** die achsiale Länge der Hülse (13) gleich oder kleiner ist als die Breite der Nockenlaufbahn (11).

5. Nocken nach einem der Ansprüche 1 bis 4, **dadurch gekennzeichnet, daß** die Wandstärke der Hülse (13) bei Verwendung eines kraft- und/oder formschlüssigen Fügeverfahrens mindestens 0,5mm und bei Verwendung eines stoffschlüssigen Fügeverfahrens mindestens 0,35mm, in beiden Fällen jedoch vorzugsweise mehr beträgt.

6. Nocken nach einem der Ansprüche 1 bis 5, **dadurch gekennzeichnet, daß** die Wandstärke der Hülse (13) mindestens 0,7 mm, vorzugsweise mehr beträgt.

7. Nocken nach einem der Ansprüche 1 bis 6, **dadurch gekennzeichnet, daß** die Aufnahmeöffnung (6) zur Aufnahme der Hülse (3) von der Kreisform abweicht.

8. Nocken nach einem der Ansprüche 1 bis 7, **dadurch gekennzeichnet, daß** die Innenwandung der Aufnahmeöffnung (6) des Nockens glatt ausgebildet ist oder eine Profilierungstiefe in radialer Richtung aufweist, welche kleiner als 0,1mm ist.

9. Nocken nach einem der Ansprüche 1 bis 8, **dadurch gekennzeichnet, daß** die Aufnahmeöffnung (6) zur Aufnahme der Hülse (13) radiale Vorsprünge (7) und/oder radial zurückweichende Aussparungen (8) aufweist.

10. Nocken nach Anspruch 9, **dadurch gekennzeichnet, daß** die radialen Vorsprünge (7) gleichmäßig am Umfang verteilt angebracht sind und eine Zahntiefe von weniger als 0,1 mm aufweisen.

11. Nocken nach Anspruch 1 bis 10, **dadurch gekennzeichnet, daß** die Hülse (13) am Innendurchmesser radiale Vorsprünge oder eine regelmäßige Verzahnung mit einer Zahntiefe von weniger als 0,1 mm aufweist.

12. Nocken nach einem der Ansprüche 1 bis 11, **dadurch gekennzeichnet, daß** die äußeren, die Nockenlaufbahn (11) des Nockens bildenden Ränder (5) der paarweise angeordneten napfartigen Blechteile (1) eine umlaufende Nut (12) zur Aufnahme eines Schmiermittels begrenzen.

13. Nocken nach Anspruch 12, **dadurch gekennzeichnet, daß** bei der paarweisen Anordnung der Blechteile (1) zur Bildung eines Nockens (3) in mindestens einem der einander zugewandten Seiten der Böden (4) eine im wesentlichen radial verlaufende Rinne zur Bildung eines Kanals eingeprägt ist und dieser Kanal über Bohrungen in der Hülse (13) und in der als Rohr ausgebildeten Welle (2) mit dem Innenraum derselben verbunden ist zur Schmiermittelversorgung der Nut (12).

14. Nocken nach einem der Ansprüche 11 bis 13, **dadurch gekennzeichnet, daß** an den einander zugewandten Seiten der Böden (4) der Blechteile (1) Positionierungsmittel, beispielsweise zusammenwirkende Dellen und/oder Noppen vorgesehen sind.

15. Nocken nach einem der Ansprüche 1 bis 14, **dadurch gekennzeichnet, daß** die napfartigen Blechteile (1) gehärtet sind.

16. Nocken nach einem der Ansprüche 1 bis 15, **dadurch gekennzeichnet, daß** die napfartigen Blechteile (1) angelassen sind.

17. Nocken nach einem der Ansprüche 1 bis 16, **dadurch gekennzeichnet, daß** die Blechteile (1) und die Hülse (13) vor ihrer Anordnung auf einer Welle (2) miteinander fest verbunden werden.

18. Nocken nach einem der Ansprüche 1 bis 17, **dadurch gekennzeichnet, daß** die Blechteile (1) aus 16MnCr5 bestehen oder 100Cr6 oder anderen Wälzlager- oder Einsatzstählen.

19. Verfahren zur Herstellung einer Nockenwelle mit Nocken nach einem der Ansprüche 1 bis 18, **dadurch gekennzeichnet, daß** die Nocken (3) zusammen mit der jeweiligen Hülse (13) in an sich bekannter Weise auf eine Welle aufgeschoben werden und auf der Welle (2) gefügt werden.

20. Verfahren nach Anspruch 19, **dadurch gekennzeichnet, dass** das Fügen auf der Welle (2) durch Laserschweißen erfolgt.

21. Verfahren zur Herstellung einer Nockenwelle mit Nocken nach einem der Ansprüche 1 bis 18, **dadurch gekennzeichnet, daß** der Nocken (3) zusammen mit der Hülse (13) auf eine Welle (2) aufgeschoben wird und die Welle in jenem Bereich, an welchem der Nocken (3) zu befestigen ist, mindestens abschnittsweise einen gegenüber den anderen Bereichen der Welle (2) vergrößerten Durchmesser aufweist und dieser Durchmesser der Welle (2) größer ist als der Innendurchmesser der Hülse (13) und beim Aufschieben des Nockens (3) mit der Hülse (13) unter Materialverdrängung eine kraft- und/oder formschlüssige Fügung erzielt wird.

22. Verfahren zur Herstellung einer Nockenwelle nach Anspruch 21, **dadurch gekennzeichnet, daß** die Vergrößerung des Durchmessers der Welle (2) durch einen Rolliervorgang längs, quer, diagonal oder kreuzweise zur Längsachse der Welle (2) erzeugt wird.

23. Verfahren zur Herstellung einer Nockenwelle mit Nocken nach einem der Ansprüche 1 bis 18, **dadurch gekennzeichnet, daß** die Nocken (3) mit der Hülse (13) nach ihrem Aufschieben auf die als Rohr ausgebildete Welle (2) mit der Welle (2) in ein Formwerkzeug eingelegt werden und die als Rohr ausgebildete Welle (2) zumindest abschnittsweise durch Innenhochdruckumformen aufgeweitet wird in der Weise, daß die Nocken (3) kraft- und/oder formschlüssig mit der Welle (2) verbunden werden.

## Claims

1. A cam having a receiving opening (6) for a shaft (2), the cam (3) being formed from at least two substantially identically shaped cup-like sheet metal portions (1), each of said portions having a base (4) and at least one outer flanged rim (5) forming the cam track (11), and the receiving opening (6) being shaped in the bases (4) of the sheet metal portions (1), and the two sheet metal portions (1) being arranged such that their bases (4) having the receiving opening (6) are mutually adjacent, **characterised in that** the dimensions of the receiving opening (6) are designed such that the interior wall of the receiving opening (6) encloses the shaft (2) with a clearance which defines an annular space for receiving a bush (1) [*sic - recte 13*] and, for the purpose of securing the cam (3) to the shaft (2), the bush (13) is arranged as a joining member between the said parts in the annular space defined by the said clearance and is joined both to the sheet metal portion (1) and to the shaft (2) positively, non-positively and/or by bonding, and **in that** the bases (4) of the sheet metal portions (1) are of a substantially plane design and the edges (9) of the recesses forming the receiving opening (6) in the bases (4) lie in the plane of the respective base (4).

2. A cam according to claim 1, **characterised in that** the bush is made from an unhardened ferrous material.

3. A cam according to claim 1 or claim 2, **characterised in that** the bush (13) has, at least at one of its ends, an outwardly flanged collar (14).

4. A cam according to any one of claims 1 to 3, **characterised in that** the axial length of the bush (13) is the same as or smaller than the width of the cam track (11).

5. A cam according to any one of claims 1 to 4, **characterised in that** the wall thickness of the bush (13) is at least 0.5 mm if a non-positive and/or positive joining method is used and is at least 0.35 mm if the joining method used is bonding, but is preferably more in both instances.

6. A cam according to any one of claims 1 to 5, **characterised in that** the wall thickness of the bush (13) is at least 0.7 mm, preferably more.

7. A cam according to any one of claims 1 to 6, **characterised in that** the receiving opening (6) for receiving the bush (3) [*sic - recte 13*] deviates from circularity.

8. A cam according to any one of claims 1 to 7, **characterised in that** the interior wall of the receiving opening (6) of the cam is of a smooth design or has, in a radial direction, a profiling depth of less than 0.1 mm.

9. A cam according to any one of claims 1 to 8, **characterised in that** the receiving opening (6) for receiving the bush (13) has radial projections (7) and/or radially set-back recesses (8).

10. A cam according to claim 9, **characterised in that** the radial projections (7) are located on the periphery in an evenly distributed manner and have a tooth depth of less than 0.1 mm.

11. A cam according to claims 1 to 10, **characterised in that** the bush (13) has, on the inside diameter, radial projections or regular toothing having a tooth depth of less than 0.1 mm.

12. A cam according to any one of claims 1 to 11, **characterised in that** the outer, cam track (11) forming rims (5) of the pairwise-arranged cup-like sheet metal portions (1) define a continuous groove (12) for receiving a lubricant.

13. A cam according to claim 12, **characterised in that**, when the sheet metal portions (1) are arranged in pairs to form a cam (3), a substantially radially extending channel is impressed in at least one of the mutually facing ends of the bases (4) to form a duct and, by means of bores in the bush (13) and in the tubular shaft (2), said duct communicates with the interior thereof to provide lubricant to the groove (12).

14. A cam according to any one of claims 11 to 13, **characterised in that**, on the mutually facing ends of the bases (4) of the sheet metal portions (1), there are provided positioning means, for example co-operating depressions and/or knobs.

15. A cam according to any one of claims 1 to 14, **characterised in that** the cup-like sheet metal portions (1) are hardened.

16. A cam according to any one of claims 1 to 15, **characterised in that** the cup-like sheet metal portions (1) are annealed.

17. A cam according to any one of claims 1 to 16, **characterised in that** the sheet metal portions (1) und the bush (13) are permanently interconnected before being arranged on a shaft (2).

18. A cam according to any one of claims 1 to 17, **characterised in that** the sheet metal portions (1) are made from 16MnCr5 or 100Cr6 or from other anti-friction bearing or case-hardened steels.

19. A method for producing a camshaft having cams according to any one of claims 1 to 18, **characterised in that** the cams (3) and each of the bushes (13) are together pushed onto a shaft in a manner that is known *per se* and are joined on the shaft (2).

20. A method according to claim 19, **characterised in that** the joining on the shaft (2) is carried out by laser welding.

21. A method for producing a camshaft having cams according to any one of claims 1 to 18, **characterised in that** the cam (3) is pushed onto a shaft (2) together with the bush (13) and, in the region to which the cam (3) is to be secured, the shaft has, at least sectionally, a larger diameter than the other regions of the shaft (2), and the said larger diameter of the shaft (2) is greater than the inside diameter of the bush (13) and, when the cam (3) is pushed on with the bush (13), a non-positive and/or positive join is achieved by means of material displacement.

22. A method for producing a camshaft according to claim 21, **characterised in that** the enlargement of the diameter of the shaft (2) is produced by means of a rollering process along, transversely to, diagonally to, or across the longitudinal axis of the shaft (2).

23. A method for producing a camshaft having cams according to any one of claims 1 to 18, **characterised in that**, after the cams (3) and the bush (13) have been pushed onto the tubular shaft (2), they are inserted into a mould with the shaft (2), and the tubular shaft (2) is expanded at least sectionally by deformation through internal high pressure such that the cams (3) are non-positively and/or positively joined to the shaft (2).

## Revendications

1. Came présentant une ouverture de réception (6) pour un arbre (2), la came (3) étant formée par au moins deux pièces de tôle (1) en forme de godets essentiellement identiques et présentant chacune un fond (4) et au moins un bord extérieur (5) rabattu formant la piste de came (11), l'ouverture de réception (6) étant formée dans les fonds (4) des deux pièces de tôle (1) montées pour que leurs fonds (4) présentant l'ouverture de réception (6) soient accolés,
**caractérisée en ce que**
les dimensions de l'ouverture de réception (6) sont telles que la paroi intérieure de l'ouverture de réception (6) entoure l'arbre (2) avec un jeu définissant un espace annulaire permettant de recevoir une douille (13) qui, dans l'espace annulaire défini par ce jeu, est montée entre ces parties comme élément de liaison pour fixer la came (3) sur l'arbre (2) et est reliée à la fois à la pièce de tôle (1) et à l'arbre (2) par complémentarité de forme, de forces et/ ou par liaison de matière, et les fonds (4) des pièces de tôle (1) ont une forme essentiellement plane et les bords (9) des évidements réalisés dans les fonds (4) pour former l'ouverture de réception (6) se situent dans le plan du fond (4) correspondant.

2. Came selon la revendication 1,
**caractérisée en ce que**
la douille se compose d'un matériau ferreux non trempé.

3. Came selon la revendication 1 ou la revendication 2,
**caractérisée en ce que**
la douille (13) présente au moins à l'une de ses extrémités une collerette à bords rabattus vers l'extérieur (14).

4. Came selon l'une quelconque des revendications 1 à 3,
**caractérisée en ce que**
la longueur axiale de la douille (13) est égale ou inférieure à la largeur de la piste de came (11).

5. Came selon l'une quelconque des revendications 1 à 4,
**caractérisée en ce que**
l'épaisseur de paroi de la douille (13) est d'au moins 0,5 mm dans les cas où on emploie un procédé d'assemblage par complémentarité de forces et/ou de formes et d'au moins 0,35 mm dans les cas où l'on emploie un assemblage par liaison de matière, mais toutefois de préférence plus importante dans les deux cas.

6. Came selon l'une quelconque des revendications 1 à 5,
**caractérisée en ce que**
l'épaisseur de paroi de la douille (13) est d'au moins 0,7 mm, de préférence supérieure.

7. Came selon l'une quelconque des revendications 1 à 6,
**caractérisée en ce que**
l'ouverture de réception (6) recevant la douille (13) est différente d'une forme circulaire.

8. Came selon l'une quelconque des revendications 1 à 7,
**caractérisée en ce que**
la paroi intérieure de l'ouverture de réception (6) de la came est lisse ou présente dans la direction radiale une zone de profilage inférieure à 0,1 mm.

9. Came selon l'une quelconque des revendications 1 à 8,
**caractérisée en ce que**
l'ouverture de réception (6) recevant la douille (13) présente des saillies radiales (7) et/ou des évidements radialement en retrait (8).

10. Came selon la revendication 9,
**caractérisée en ce que**
les saillies radiales (7) sont réparties régulièrement sur la circonférence et présentent une profondeur de dent inférieure à 0,1 mm.

11. Came selon la revendication 1 à 10,
**caractérisée en ce que**
la douille (13) présente sur le diamètre intérieur des saillies radiales ou une denture régulière dont la profondeur de dent est inférieure à 0,1 mm.

12. Came selon l'une quelconque des revendications 1 à 11,
**caractérisée en ce que**
les bords (5) extérieurs des paires de pièces de tôle (1) en forme de godets, lesquels bords forment la piste (11) de la came, délimitent une rainure périphérique (12) destinée à recevoir un lubrifiant.

13. Came selon la revendication 12,
**caractérisée en ce que**
l'agencement par paire des pièces de tôle (1) pour former une came (3) présente, dans au moins l'une des faces des fonds (4) tournées l'une vers l'autre, une rigole essentiellement radiale gravée pour former un canal et ce canal communique, moyennant des alésages pratiqués dans la douille (13) et dans l'arbre en forme de tube (2), avec l'intérieur de celui-ci afin d'apporter du lubrifiant à la rainure (12).

14. Came selon l'une quelconque des revendications 11 à 13,
**caractérisée en ce que**
les faces des fonds (4) tournées l'une vers l'autre des pièces de tôle (1) présentent des moyens de positionnement, par exemple des petites cuvettes et/ou des protubérances coopérantes.

15. Came selon l'une quelconque des revendications 1 à 14,
**caractérisée en ce que**
les pièces de tôle en forme de godets (1) sont trempées.

16. Came selon l'une quelconque des revendications 1 à 15,
**caractérisée en ce que**
les pièces de tôle en forme de godets (1) sont revenues.

17. Came selon l'une quelconque des revendications 1 à 16,
**caractérisée en ce que**
les pièces de tôle (1) et la douille (13) sont solidement liées les unes aux autres préalablement à leur montage sur un arbre (2).

18. Came selon l'une quelconque des revendications 1 à 17,
**caractérisée en ce que**
les pièces de tôle (1) se composent de 16MnCr5 ou de 100Cr6 ou d'autres aciers de roulement ou aciers de cémentation.

19. Procédé de fabrication d'un arbre à cames présentant les cames selon l'une quelconque des revendications 1 à 18,
**caractérisé en ce que**
les cames (3), conjointement à leur douille respective (13) sont enfichées de manière connue en soi et assemblées sur un arbre (2).

20. Procédé selon la revendication 19,
**caractérisé en ce que**
l'assemblage sur l'arbre (2) s'effectue par soudage au laser.

21. Procédé de fabrication d'un arbre à cames présentant les cames selon l'une quelconque des revendications 1 à 18,
**caractérisé en ce que**
la came (3) conjointement à la douille (13) est enfichée sur un arbre (2) et l'arbre présente, dans chaque portion sur laquelle la came (3) est fixée, au moins partiellement un diamètre supérieur à celui des autres portions de l'arbre (2) et ce diamètre de l'arbre (2) est plus grand que le diamètre intérieur de la douille (13) et l'enfichage de la came (3) comportant la douille (13) produit, par déplacement de matière, un assemblage par complémentarité de forces et/ou de formes.

22. Procédé de fabrication d'un arbre à cames selon la revendication 21,
**caractérisé en ce que**
l'agrandissement du diamètre de l'arbre (2) est produit par laminage effectué de manière longitudinale, transversale, diagonale ou croisée par rapport à l'axe longitudinal de l'arbre (2).

23. Procédé de fabrication d'un arbre à cames présentant les cames selon l'une quelconque des revendications 1 à 18,
**caractérisé en ce que**
les cames (3) comportant la douille (13), après leur enfichage sur l'arbre en forme de tube (2), sont placées dans un outil de formage et l'arbre en forme de tube (2) est élargi au moins partiellement par formage sous haute pression interne de telle manière que les cames (3) sont assemblées par complémentarité de force et/ou de formes avec l'arbre (2).
